# EUROPÄISCHE PATENTSCHRIFT

(11) **EP 3 008 742 B1**
(45) Veröffentlichungstag und Bekanntmachung des Hinweises auf die Patenterteilung: **08.05.2019**
(21) Anmeldenummer: 14723425.6
(22) Anmeldetag: 12.05.2014
(51) Int. Cl.: H01H 9/02, G08C 17/02, H01H 23/14, H02K 35/00

(54) **SCHALTVORRICHTUNG FÜR EINEN FUNKTASTER, FUNKTASTER UND VERFAHREN ZUM ERZEUGEN EINES SCHALTSIGNALS EINER SCHALTVORRICHTUNG**
SWITCHING DEVICE FOR A RADIO PUSHBUTTON, RADIO PUSHBUTTON, AND METHOD FOR PRODUCING A SWITCHING SIGNAL OF A SWITCHING DEVICE
DISPOSITIF DE COMMUTATION POUR UN BOUTON-POUSSOIR ÉMETTEUR, BOUTON-POUSSOIR ÉMETTEUR, ET PROCÉDÉ DE GÉNÉRATION D'UN SIGNAL DE COMMUTATION D'UN DISPOSITIF DE COMMUTATION

(30) Priorität: 13.06.2013 DE 102013211015
(43) Veröffentlichungstag der Anmeldung: 20.04.2016
(73) Patentinhaber: ZF Friedrichshafen AG, 88046 Friedrichshafen (DE)
(72) Erfinder: RUFF, Eduard, 91275 Auerbach (DE)
(86) Internationale Anmeldenummer: PCT/EP2014/059599
(87) Internationale Veröffentlichungsnummer: WO 2014/198471

(56) Entgegenhaltungen:
- EP-A1- 1 473 748
- WO-A1-2011/128598
- WO-A1-2013/053565

## Beschreibung

Die vorliegende Erfindung bezieht sich auf eine Schaltvorrichtung für einen Funktaster, auf einen Funktaster und auf ein Verfahren zum Erzeugen eines Schaltsignals einer Schaltvorrichtung, insbesondere für den Bereich der Haustechnik zur Aufputzmontage.

Funktaster werden insbesondere in der Haustechnik beispielsweise als Aufputzlösung angewandt. Dabei können per Funktaster eine mögliche Vielzahl von Verbrauchern per Schaltsignal angesteuert werden, wie beispielsweise Leuchtmittel, Jalousien und dergleichen. Die DE 28 43 891 A1 offenbart ein elektrisches Installationsgerät, wie einen Schalter oder Taster. Die EP 1 473 748 A1 offenbart ein Gehäuse zur Aufnahme einer mit einer Mehrzahl von Schaltkontakten versehenen, energieautarken Funkschaltvorrichtung mit einer Mehrzahl von manuell betätigbaren Drucktasten, wobei das Gehäuse zumindest eine Öffnung zur Aufnahme der Drucktasten aufweist und die Öffnung durch einen Steg unterteilt ist, der zur schwenkbaren Lagerung und auswechselbaren Fixierung der Drucktasten ausgebildet ist.

Vor diesem Hintergrund schafft die vorliegende Erfindung eine verbesserte Schaltvorrichtung für einen Funktaster, einen verbesserten Funktaster und ein verbessertes Verfahren zum Erzeugen eines Schaltsignals einer Schaltvorrichtung gemäß den Hauptansprüchen. Vorteilhafte Ausgestaltungen ergeben sich aus den Unteransprüchen und der nachfolgenden Beschreibung.

Gemäß Ausführungsformen der vorliegenden Erfindung kann eine vorteilhafte Schaltvorrichtung bzw. ein vorteilhaftes Schaltmodul für einen autarken Funktaster für Gebäudetechnik bereitgestellt und mittels derselben ein Schaltsignal vorteilhaft erzeugt werden. Insbesondere ermöglicht eine Schaltmechanik der Schaltvorrichtung, anstelle einer parallelen Betätigung von Codierkontakten und Energiewandler, vorteilhafterweise eine Reihenschaltung von Codierkontakten und Energiewandler, wobei eine Betätigungskraft zum Betätigen von Codierkontakten geringer ist als eine Betätigungskraft zum Betätigen des Energiewandlers.

Vorteilhafterweise kann gemäß Ausführungsformen der vorliegenden Erfindung insbesondere aufgrund der Reihenschaltung der Codierkontakte und des Energiewandlers ein Erfordernis einer hochpräzisen Toleranzauslegung und Feinabstimmung von Einzelteilen vermieden werden. Dabei kann insbesondere zumindest ein Codierkontakt während eines Aktivierens des Energiewandlers geschlossen bleiben, sodass eine aufwendige zeitliche Abstimmung von Bewegungen der verschiedenen Betätigungsmittel unkritisch ist. Gemäß Ausführungsformen der vorliegenden Erfindung kann insbesondere eine Schaltvorrichtung für eine vielseitige bzw. universelle Verwendung in Verbindung mit einer Vielzahl von Ausführungen eines Funktasters, beispielsweise in Gestalt eines Einfach- oder Mehrfach-Lichttasters bzw. -Lichtschalters oder -Jalousieschalters mit geteilter oder ungeteilter Taste, bereitgestellt werden. Gemäß Ausführungsformen der vorliegenden Erfindung können beispielsweise Installationssysteme bzw. Installationselemente mit Funksteuerung für beliebige Zugriffsmöglichkeiten auf unterschiedliche Verbraucher realisiert werden, insbesondere ein Funktaster bzw. Funkschalter mit mehreren Schaltfunktionen.

Insbesondere können gemäß Ausführungsformen der vorliegenden Erfindung Nachteile vieler üblicher Schaltvorrichtungen bzw. Schaltmodule vermieden werden, die unter anderem so konzipiert sind, dass beispielsweise eine Betätigung auf je einen von zwei beweglichen Hebeln eingeleitet wird, welche einen elektromagnetischen Energiewandler aktivieren. Bei solchen Schaltmodulen kann üblicherweise ein Gehäuse dabei starr ausgebildet sein und einen gewissen Freiraum unter einer Taste erfordern, um eine Kollision bei einer Kippbewegung der Taste zu vermeiden. Gleichzeitig wird mit einem Zusatzelement der Taste einer von beispielsweise vier Codierschaltern betätigt. Während der Betätigung wird ein Energieimpuls generiert und in einem Elektronikmodul in Abhängigkeit von dem bereits betätigten Codierschalter zu einem Funksignal umgewandelt und per Funk versendet. Ein solches Schaltmodul hat jedoch Nachteile im Zusammenhang mit der Codierkontaktbetätigung. Codierschalter, welche sich auf eine Leiterplatte im Inneren des Schaltmoduls befinden, sind mit einem Zusatzelement der Taste gleichzeitig zu der Energiewandler-Aktivierung zu betätigen. Dies erfordert eine Feinabstimmung und sehr präzise Toleranzen im System, was gemäß Ausführungsformen der vorliegenden Erfindung genau vermieden werden kann. Außerdem kann bei vielen herkömmlichen Schaltmodulen eine Betätigungstaste im Falle der Verwendung in Verbindung mit einem Doppelschalter geteilt auszulegen sein und eine Ausbaufähigkeit eines solchen Systems auf beispielsweise maximal zwei Vierwegeschalter mit zwei Betätigungstasten in einem Gerät beschränkt sein, was gemäß Ausführungsformen der vorliegenden Erfindung ebenfalls vermieden werden kann.

Die vorliegende Erfindung betrifft eine Schaltvorrichtung gemäß Anspruch 1.

Die Schaltvorrichtung kann auch als ein Schaltmodul bezeichnet werden. Die Schaltvorrichtung kann mechanische Komponenten und elektronische Komponenten zum Erzeugen bzw. Bereitstellen des Schaltsignals aufweisen. Insbesondere kann die Schaltvorrichtung ausgebildet sein, um ansprechend auf einen Betätigungsvorgang, bei dem eine externe Betätigungskraft auf die Schaltvorrichtung übertragen wird, das Schaltsignal zu erzeugen bzw. bereitzustellen. Die Betätigungsmittel können ausgebildet sein, um die Betätigungskraft sowohl auf die Codierkontakte als auch auf die Energiewandlereinrichtung zu übertragen. Dabei können die Betätigungsmittel ausgebildet sein, um die Energiewandlereinrichtung zu aktivieren, während zumindest einer der Codierkontakte kontaktiert wird. Die Energiewandlereinrichtung kann ausgebildet sein, um mechanische Energie der Betätigungskraft in elektrische Energie umzuwandeln. Die Codierkontakte können ausgebildet sein, um bei einer Kontaktierung durch die Betätigungsmittel aufgrund der Betätigungskraft das Bereitstellen des Codiersignals zu ermöglichen. Die Schaltvorrichtung kann dazu eine elektrische Codierschaltung aufweisen, die mit den Codierkontakten elektrisch verbunden und ausgebildet ist, um abhängig davon, welcher der Codierkontakte von den Betätigungsmitteln kontaktiert ist, ein individuelles Codiersignal zu erzeugen. Das Codiersignal kann Angaben dahin gehend repräsentieren, welcher der Codierkontakte von den Betätigungsmitteln kontaktiert ist. Die Signalausgabeeinrichtung kann eine Antenneneinrichtung aufweisen, insbesondere eine auf einen Schaltungsträger, beispielsweise eine Leiterplatte, aufgedruckte Antenneneinrichtung. Die Signalausgabeeinrichtung kann ausgebildet sein, um das Schaltsignal per Funk an eine Schnittstelle zu einem Steuergerät und zusätzlich oder alternativ zu mindestens einem ansteuerbaren Gerät auszugeben. Die Schaltvorrichtung kann eine elektrische Schaltung aufweisen, die sowohl mit der elektrischen Codierschaltung bzw. mit den Codierkontakten als auch mit der Energiewandlereinrichtung sowie der Signalausgabeeinrichtung elektrisch verbunden ist.

Gemäß einer Ausführungsform können die Betätigungsmittel zum Kontaktieren des mindestens einen Codierkontakts eine Schaltfolie mit einer Mehrzahl von Schaltvorsprüngen aufweisen. Dabei können die Betätigungsmittel zum Aktivieren der Energiewandlereinrichtung zumindest zwei Hebelelemente aufweisen. Die Schaltfolie kann aus einem elastisch verformbaren Material ausgeformt sein. Die Schaltvorsprünge können in Gestalt von Schaltpillen, Schaltnoppen oder dergleichen ausgeformt und an einer Hauptoberfläche der Schaltfolie angeordnet sein. Bei einem Betätigungsvorgang können die Schaltvorsprünge unabhängig voneinander oder gemeinsam in die Codierstellung bewegbar sein. Dabei können Anordnung und Anzahl von Schaltvorsprüngen jenen der Codierkontakte entsprechen. Die zumindest zwei Hebelelemente können hierbei durch ein elastisches Mittel in eine Grundstellung vorgespannt sein. Bei einem Betätigungsvorgang können die zumindest zwei Hebelelemente unabhängig voneinander oder gemeinsam in die Aktivierungsstellung bewegbar sein. Eine solche Ausführungsform bietet den Vorteil, dass bei einem Betätigungsvorgang eine vorteilhafte Kombination von zwei Arten von Betätigungsmitteln vorgesehen ist, um die vorteilhafte, serielle Betätigung der Codierkontakte und des Energiewandlers zu ermöglichen.

Auch kann die Schaltvorrichtung zumindest ein Kopplungselement zum Koppeln mit einer Bodenplatte des Funktasters aufweisen. Hierbei kann das zumindest eine Kopplungselement ausgebildet sein, um bei einem Betätigungsvorgang abhängig von einer Einleitungsposition der Betätigungskraft in die Schaltvorrichtung eine Schwenkbewegung oder eine Linearbewegung der Betätigungsmittel der Schaltvorrichtung relativ zu der Bodenplatte des Funktasters zu ermöglichen. Das zumindest eine Kopplungselement kann auch als ein Kopplungsabschnitt der Schaltvorrichtung ausgeformt sein. Dabei kann das zumindest eine Kopplungselement als ein Langloch oder dergleichen ausgeformt sein. Bei einer Schwenkbewegung der Betätigungsmittel relativ zu einer Bodenplatte des Funktasters kann die Schaltvorrichtung ausgebildet sein, um ein Schaltsignal bereitzustellen, das ein Steuern einer einzelnen Funktion bzw. eines einzelnen Verbrauchers bewirkt. Bei einer Linearbewegung der Betätigungsmittel relativ zu einer Bodenplatte des Funktasters kann die Schaltvorrichtung ausgebildet sein, um ein Schaltsignal bereitzustellen, das ein Steuern mehrerer Funktionen bzw. Verbraucher bewirkt. Eine solche Ausführungsform bietet den Vorteil, dass aufgrund der zwei möglichen Bewegungsarten mittels der Schaltvorrichtung noch mehr Schaltfunktionen bzw. noch mehr verschiedene Schaltsignale realisiert werden können.

Dabei können die Betätigungsmittel zum Aktivieren der Energiewandlereinrichtung ausgebildet sein, um bei einem Betätigungsvorgang sowohl im Fall einer zentral in die Schaltvorrichtung eingeleiteten Betätigungskraft als auch im Fall einer dezentral in die Schaltvorrichtung eingeleiteten Betätigungskraft die Energiewandlereinrichtung auf gleiche Weise zu aktivieren. Hierbei kann die Schaltvorrichtung ausgebildet sein, um bei einem Betätigungsvorgang im Fall einer zentral in die Schaltvorrichtung eingeleiteten Betätigungskraft eine erste taktile Rückkopplung für einen Benutzer bereitzustellen und im Fall einer dezentral in die Schaltvorrichtung eingeleiteten Betätigungskraft eine von der ersten taktilen Rückkopplung unterschiedliche, zweite taktile Rückkopplung für einen Benutzer bereitzustellen. Eine solche Ausführungsform bietet den Vorteil, dass die Energiewandlereinrichtung unabhängig von einem Angriffpunkt einer Betätigungskraft zuverlässig aktiviert wird, um Energie bereitzustellen. Zudem erhält ein Benutzer ein haptisches Feedback hinsichtlich einer Betätigungsart bzw. einer dadurch auslösbaren Funktion.

Erfindungsgemäß ist ein Schaltungsträger vorgesehen, an dem die Signalausgabeeinrichtung und die Codierkontakte angeordnet sind. Dabei ist der Schaltungsträger in einem Betätigungsbereich der Schaltvorrichtung angeordnet, in dem die Betätigungskraft auf die Schaltvorrichtung übertragbar ist. Dabei ist die Energiewandlereinrichtung in einem Kopplungsbereich der Schaltvorrichtung angeordnet, in dem die Schaltvorrichtung mit dem Funktaster koppelbar ist. Der Schaltungsträger kann eine Leiterplatte, eine gedruckte Schaltungsplatine oder dergleichen aufweisen. Die Signalausgabeeinrichtung kann an dem Schaltungsträger mittels in der Halbleitertechnik üblicher Verfahren aufgebracht sein. Auch kann der Schaltungsträger zumindest eine elektrische Schaltung aufweisen, die mit den Codierkontakten, der Signalausgabeeinrichtung und der Energiewandlereinrichtung elektrisch verbunden ist. Eine solche Ausführungsform bietet den Vorteil, dass aufgrund der Anordnung der Signalausgabeeinrichtung an dem Schaltungsträger im Betätigungsbereich der Schaltvorrichtung, anstatt im Kopplungsbereich, somit eine verlustarme Abstrahlung des Schaltsignals ermöglicht wird.

Hierbei kann die Schaltvorrichtung von dem Kopplungsbereich aus zu dem Betätigungsbereich hin die Energiewandlereinrichtung, die Betätigungsmittel zum Aktivieren der Energiewandlereinrichtung, ein Gehäuse, den Schaltungsträger, einen Abstandhalter und die Betätigungsmittel zum Kontaktieren des mindestens einen Codierkontakts aufweisen. Das Gehäuse kann aus einem Kunststoffmaterial ausgeformt sein. Der Abstandhalter kann zwischen dem Schaltungsträger mit den Codierkontakten und den Betätigungsmitteln zum Kontaktieren des mindestens einen Codierkontakts angeordnet sein. Dabei kann der Abstandhalter als eine Folie oder dergleichen ausgeformt sein. Der Abstandhalter kann Durchgangslöcher aufweisen, die ausgebildet sind, um einen Durchtritt zumindest von Teilabschnitten der Betätigungsmittel zum Kontaktieren zu den Codierkontakten zu ermöglichen. Hierbei können Anzahl und Anordnung der Durchgangslöcher jenen der Codierkontakte und Betätigungsmittel zum Kontaktieren entsprechen. Auch kann ein Betätigungsweg der Betätigungsmittel zum Kontaktieren der Codierkontakte von einer Dicke des Abstandhalters abhängig sein. Eine solche Ausführungsform bietet den Vorteil, dass eine Platz sparende und die serielle Betätigung begünstigende Anordnung der Elemente der Schaltvorrichtung realisiert ist.

Zudem kann die Schaltvorrichtung Rückstellfedern der Betätigungsmittel zum Aktivieren der Energiewandlereinrichtung und elastische Mittel aufweisen, die ausgebildet sind, um die Betätigungsmittel in eine Ruhestellung vorzuspannen, in der die Betätigungsmittel von den Codierkontakten beabstandet sind und die Energiewandlereinrichtung deaktiviert ist. Die Betätigungsmittel sind ausgebildet, um bei Abwesenheit einer Betätigungskraft in der Ruhestellung angeordnet zu sein. Eine solche Ausführungsform bietet den Vorteil, dass für Betätigungsvorgänge eine definierte Ausgangsstellung geschaffen ist, sodass die serielle Betätigung von Codierkontakten und Energiewandler sichergestellt werden kann.

Auch kann die Signalausgabeeinrichtung ausgebildet sein, um bei einer Rückbewegung der Betätigungsmittel von der Aktivierungsstellung in eine Ruhestellung ein weiteres Schaltsignal auszugeben. Die Betätigungsmittel sind ausgebildet, um bei der Rückbewegung die Energiewandlereinrichtung nochmals zum Generieren von Energie zu aktivieren, während die Betätigungsmittel den zumindest einen Codierkontakt weiter kontaktieren, daraufhin die Energiewandlereinrichtung zu deaktivieren und sich schließlich von dem zumindest einen Codierkontakt zu lösen. Eine solche Ausführungsform bietet den Vorteil, dass mit dem weiteren Schaltsignal ein Ende des Betätigungsvorgangs signalisiert werden kann, sodass eine übertragene Datenmenge reduziert und ein Energieaufwand verringert werden können.

Die vorliegende Erfindung betrifft auch einen Funktaster mit folgenden Merkmalen:
eine Ausführungsform der vorstehend genannten Schaltvorrichtung;
einer Bodenplatte als eine Montagebasis zur Montage des Funktasters an einem Träger, wobei die Bodenplatte zumindest ein Ankopplungselement zum Ankoppeln der Schaltvorrichtung aufweist; und
einer Taste zum Übertragen der Betätigungskraft auf die Schaltvorrichtung, wobei die Taste an der Schaltvorrichtung anbringbar ist.

Eine Ausführungsform der vorstehend genannten Schaltvorrichtung kann in Verbindung mit dem Funktaster vorteilhaft eingesetzt bzw. verwendet werden, um ein Schaltsignal bereitzustellen. Der Funktaster kann ausgebildet sein, um über das mittels der Schaltvorrichtung bereitgestellte Schaltsignal zumindest ein externes Gerät per Funkübertragung des Schaltsignals anzusteuern. Die Bodenplatte kann für eine Wandmontage über Putz oder eine sonstige Oberflächenmontage des Funktasters in einem Gebäude oder dergleichen vorgesehen sein. Somit handelt es sich bei dem Träger um eine Wand oder sonstige Oberfläche insbesondere eines Gebäudes. Das zumindest eine Ankopplungselement kann in Gestalt eines Vorsprungs, Zapfens oder dergleichen ausgeformt sein. Auch kann das zumindest eine Ankopplungselement als ein Ankopplungsabschnitt einer einstückig ausgeformten Bodenplatte vorgesehen sein. Die Taste kann in dem Betätigungsbereich der Schaltvorrichtung an der Schaltvorrichtung anbringbar sein. Dabei kann die Taste ausgebildet sein, um die Betätigungskraft auf die Betätigungsmittel der Schaltvorrichtung zu übertragen.

Gemäß einer Ausführungsform kann die Taste in eine Mehrzahl von betätigbaren Tastensegmenten unterteilt sein. Dabei kann der Funktaster ausgebildet sein, um in Abhängigkeit von zumindest einem betätigten Tastensegment eines von einer Mehrzahl unterschiedlicher Schaltsignale bereitzustellen. Die Tastensegmente können hierbei unabhängig voneinander oder zumindest teilweise gemeinsam betätigbar sein. So können beispielsweise zumindest ein Paar von ersten Tastensegmenten für zwei unterschiedliche Steuerbefehle an einen Verbraucher und zumindest ein zweites Tastensegment für einen Steuerbefehl an alle mittels des Funktasters ansteuerbaren Verbraucher vorgesehen sein. Die Schaltvorrichtung kann dabei insbesondere eine der Anzahl und Anordnung von Tastensegmenten entsprechende Anzahl und Anordnung von Codierkontakten und Betätigungsmitteln zum Kontaktieren der Codierkontakte aufweisen. Eine solche Ausführungsform bietet den Vorteil, dass der Funktaster für eine Vielfalt von verschiedenen Schaltfunktionen auch in Bezug auf mehrere Verbraucher bzw. ansteuerbare Geräte einsetzbar ist.

Die vorliegende Erfindung betrifft ferner ein Verfahren zum Erzeugen eines Schaltsignals einer Schaltvorrichtung für einen Funktaster gemäß Anspruch 10.

Das Verfahren kann vorteilhaft ausgeführt werden, um in Verbindung mit dem vorstehend genannten Funktaster bzw. in Verbindung mit der vorstehend genannten Schaltvorrichtung ein Schaltsignal bereitzustellen.

Die Erfindung wird anhand der beigefügten Zeichnungen beispielhaft näher erläutert. Es zeigen:
- Fig. 1: eine schematische Darstellung eines Funktasters gemäß einem Ausführungsbeispiel der vorliegenden Erfindung;
- Fig. 2: ein Ablaufdiagramm eines Verfahrens zum Erzeugen eines Schaltsignals gemäß einem Ausführungsbeispiel der vorliegenden Erfindung;
- Fig. 3: eine perspektivische Explosionsdarstellung eines Funktasters gemäß einem Ausführungsbeispiel der vorliegenden Erfindung;
- Fig. 4: eine perspektivische Explosionsdarstellung der Schaltvorrichtung des Funktasters aus Fig. 3;
- Fig. 5: eine perspektivische Teilexplosionsdarstellung der Schaltvorrichtung des Funktasters aus Fig. 3;
- Figuren 6A bis 6C: Schnittdarstellungen des Funktasters aus Fig. 3 in einem zusammengefügten Zustand desselben;
- Fig. 7: eine perspektivische Darstellung der Schaltvorrichtung des Funktasters aus Fig. 3 in einem zusammengefügten Zustand derselben; und
- Fig. 8: eine perspektivische Teilschnittdarstellung des Funktasters aus Fig. 3 in einem zusammengefügten Zustand desselben.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

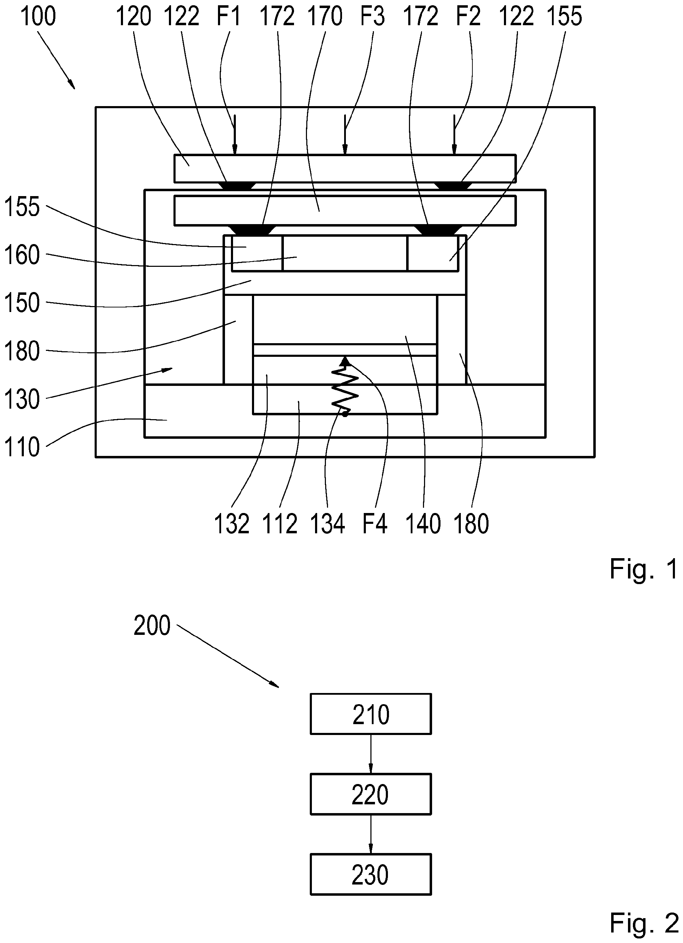

Fig. 1 zeigt eine schematische Darstellung eines Funktasters 100 gemäß einem Ausführungsbeispiel der vorliegenden Erfindung. Der Funktaster 100 umfasst eine Grundplatte bzw. Bodenplatte 110, beispielhaft ein Ankopplungselement 112, eine Taste 120, beispielhaft zwei Schaltnoppen 122, eine Schaltvorrichtung 130 bzw. ein Schaltmodul, beispielhaft ein Kopplungselement 132, elastische Mittel 134, eine Energiewandlereinrichtung 140, einen Schaltungsträger 150 bzw. eine Leiterplatte, beispielhaft zwei Codierkontakte 155, eine Signalausgabeeinrichtung 160 beispielsweise mit Funkelektronik und Antenne, Betätigungsmittel zum Kontaktieren beispielhaft in Gestalt einer Schaltfolie 170, beispielhaft zwei Schaltvorsprünge 172 und Betätigungsmittel zum Aktivieren beispielhaft in Gestalt von zwei Betätigungshebeln 180. Ferner dargestellt sind eine erste Betätigungskraft F1, die dezentral auf die Taste 120 des Funktasters 100 bzw. auf die Schaltvorrichtung 130 ausübbar ist, in Fig. 1 beispielhaft dezentral links gezeigt, eine zweite Betätigungskraft F2, die dezentral auf die Taste 120 des Funktasters 100 bzw. auf die Schaltvorrichtung 130 ausübbar ist, in Fig. 1 beispielhaft dezentral rechts gezeigt, eine dritte Betätigungskraft F3, die zentral auf die Taste 120 des Funktasters 100 bzw. auf die Schaltvorrichtung 130 ausübbar ist, und eine den Betätigungskräften F1, F2 und F3 entgegen gerichtete Federkraft F4 der elastischen Mittel 134.

Der Funktaster 100 weist die Bodenplatte 110 mit dem beispielhaft einen Ankopplungselement 112, die Taste 120 mit den beispielhaft zwei Schaltnoppen 122 und die Schaltvorrichtung 130 auf. Die Bodenplatte 110 ist eine Montagebasis zur Montage des Funktasters 100 an einem Träger vorgesehen, wie beispielsweise an eine Wand oder dergleichen. Auch weist die Bodenplatte 110 zumindest ein Ankopplungselement 112 zum Ankoppeln der Schaltvorrichtung 130 an die Bodenplatte 110 auf. Die Schaltvorrichtung 130 ist zwischen der Bodenplatte 110 und der Taste 120 angeordnet. Gemäß dem in Fig. 1 dargestellten Ausführungsbeispiel der vorliegenden Erfindung ist die Energiewandlereinrichtung 140 sowohl zwischen den Betätigungshebeln 180 als auch zwischen der Grundplatte 110 und dem Schaltungsträger 150 angeordnet. Der Schaltungsträger 150 mit den Codierkontakten 155 und der Signalausgabeeinrichtung 160 ist zwischen der Schaltfolie 170 mit den Schaltvorsprüngen 172 und der Energiewandlereinrichtung 140 sowie den Betätigungshebeln 180 angeordnet. Die Schaltfolie 170 ist zwischen dem Schaltungsträger 150 und der der Taste 120 angeordnet.

Die Taste 120 ist ausgebildet zum Übertragen einer Betätigungskraft auf die Schaltvorrichtung 130, insbesondere auf die Schaltfolie 170, ein Gehäuse der Schaltvorrichtung 130, den Schaltungsträger 150 und die Betätigungshebel 180. Dabei sind die Schaltnoppen 122 auch ausgebildet, um die Betätigungskraft auf die Schaltvorrichtung 130 zu übertragen, insbesondere auf die Schaltfolie 170. Die Taste 120 ist an der Schaltvorrichtung 130 anbringbar, insbesondere an einem Gehäuse der Schaltvorrichtung 130.

Die Schaltvorrichtung 130 weist das beispielhaft eine Kopplungselement 132, die Energiewandlereinrichtung 140, den Schaltungsträger 150, die beispielhaft zwei Codierkontakte 155, die Signalausgabeeinrichtung 160, die Schaltfolie 170, die beispielhaft zwei Schaltvorsprünge 172 und die Betätigungshebel 180 auf. Das Kopplungselement 132 ist mit dem Ankopplungselement 112 der Bodenplatte 110 koppelbar, um die Schaltvorrichtung 130 an der Bodenplatte 110 zu befestigen. Die Energie Wandlereinrichtung 140 ist ausgebildet, um durch die Betätigungskraft eingebrachte mechanische Energie in elektrische Energie umzuwandeln. An dem Schaltungsträger 150 sind die beispielhaft zwei Codierkontakte 155 und die Signalausgabeeinrichtung 160 angeordnet. Die Schaltfolie 170 weist die beispielhaft zwei Schaltvorsprünge 172 auf. Dabei sind die Schaltvorsprünge 172 an der Schaltfolie 170 angeordnet. Die Schaltfolie 170 und die Betätigungshebel 180 repräsentieren die Betätigungsmittel der Schaltvorrichtung 130.

Bei einem Betätigungsvorgang des Funktasters 100 wirkt eine externe Betätigungskraft auf die Taste 120. Von der Taste 120 mit den Schaltnoppen 122 wird die Betätigungskraft auf die Schaltfolie 170, ein Gehäuse der Schaltvorrichtung 130, den Schaltungsträger 150 und die Betätigungshebel 180 übertragen. Die Betätigungsmittel, welche die Schaltfolie 170 und die Betätigungshebel 180 aufweisen, sind ausgebildet, um bei einem Betätigungsvorgang der Schaltvorrichtung 130 bei Anliegen eines ersten Betrags einer Betätigungskraft in einer Codierstellung mindestens einen der Mehrzahl von Codierkontakten 155 zu kontaktieren, um ein Codiersignal bereitzustellen. Aufgrund der Betätigungskraft gelangt zumindest einer der Schaltvorsprünge 172 der Schaltfolie 170 in Kontakt mit zumindest einem der Codierkontakte 155 des Schaltungsträgers 150. Auch sind die Betätigungsmittel ausgebildet, um bei einem Betätigungsvorgang der Schaltvorrichtung 130 bei Anliegen eines zweiten Betrags der Betätigungskraft, der größer als der erste Betrag ist, in einer Aktivierungsstellung die Energiewandlereinrichtung 140 zu aktivieren, um elektrische Energie zu generieren. Dabei aktiviert aufgrund der Betätigungskraft zumindest einer der Betätigungshebel 180 die Energiewandlereinrichtung 140, sodass elektrische Energie erzeugt wird. Die Signalausgabeeinrichtung 160 ausgebildet, um unter Verwendung des Codiersignals und der elektrischen Energie ein Schaltsignal per Funk auszugeben.

Gemäß einem Ausführungsbeispiel ist die Taste 120 in eine Mehrzahl von betätigbaren Tastensegmenten unterteilt, wobei der Funktaster 100 ausgebildet ist, um in Abhängigkeit von zumindest einem betätigten Tastensegment eines von einer Mehrzahl unterschiedlicher Schaltsignale bereitzustellen. Dabei ist jedem der Tastensegmente beispielhaft zumindest eine Schaltnoppe zugeordnet. Gemäß einem Ausführungsbeispiel ist das Kopplungselement 132 der Schaltvorrichtung 130 ausgebildet, um bei einem Betätigungsvorgang eine Schwenkbewegung und zusätzlich oder alternativ eine Linearbewegung der Betätigungsmittel 170, 180 der Schaltvorrichtung 130 relativ zu der Bodenplatte 110 des Funktasters 100 zu ermöglichen. Hierbei sind die elastischen Mittel 134 ausgebildet, um mittels der Federkraft F4 die Schaltvorrichtung 130, insbesondere die Betätigungsmittel 170, 180 in eine Ruhestellung vorzuspannen, in der die Betätigungsmittel 170, 180 von den Codierkontakten 155 beabstandet sind und die Energiewandlereinrichtung 140 deaktiviert ist. Gemäß einem Ausführungsbeispiel ist die Signalausgabeeinrichtung 160 ausgebildet, um bei einer Rückbewegung der Betätigungsmittel 170, 180 von der Aktivierungsstellung in eine Ruhestellung ein weiteres Schaltsignal auszugeben.

Bei Ausüben der dritten Betätigungskraft F3 zentral auf die Taste 120 des Funktasters 100 bzw. auf die Schaltvorrichtung 130 werden beispielsweise beide Betätigungshebel 180 betätigt. Bei Ausüben beispielsweise der zweiten Betätigungskraft F2 dezentral rechts auf die Taste 120 des Funktasters 100 bzw. auf die Schaltvorrichtung 130 wird insbesondere der in Fig. 1 rechts dargestellte Betätigungshebel 180 betätigt.

Fig. 2 zeigt ein Ablaufdiagramm eines Verfahrens 200 zum Erzeugen eines Schaltsignals einer Schaltvorrichtung für einen Funktaster bei einem Betätigungsvorgang der Schaltvorrichtung gemäß einem Ausführungsbeispiel der vorliegenden Erfindung. Das Verfahren 200 ist in Verbindung mit einer Schaltvorrichtung ausführbar ist, die eine Energiewandlereinrichtung, eine Signalausgabeeinrichtung, Betätigungsmittel und eine Mehrzahl von Codierkontakten aufweist. Somit ist das Verfahren 200 in Verbindung mit einer der Schaltvorrichtungen und/oder Funktaster aus Fig. 1 bzw. Fig. 3 bis Fig. 8 vorteilhaft ausführbar.

Das Verfahren 200 umfasst einen Schritt 210 des Bereitstellens eines Codiersignals, wenn bei Anliegen eines ersten Betrags einer Betätigungskraft die Betätigungsmittel in einer Codierstellung mindestens einen der Mehrzahl von Codierkontakten kontaktieren. Ferner umfasst das Verfahren 200 einen Schritt 220 des Generierens von Energie, wenn bei Anliegen eines zweiten Betrags der Betätigungskraft, der größer als der erste Betrag ist, die Betätigungsmittel in einer Aktivierungsstellung die Energiewandlereinrichtung aktivieren. Auch weist das Verfahren 200 einen Schritt 230 des Ausgebens des Schaltsignals per Funk mittels der Signalausgabeeinrichtung unter Verwendung des Codiersignals und der Energie auf.

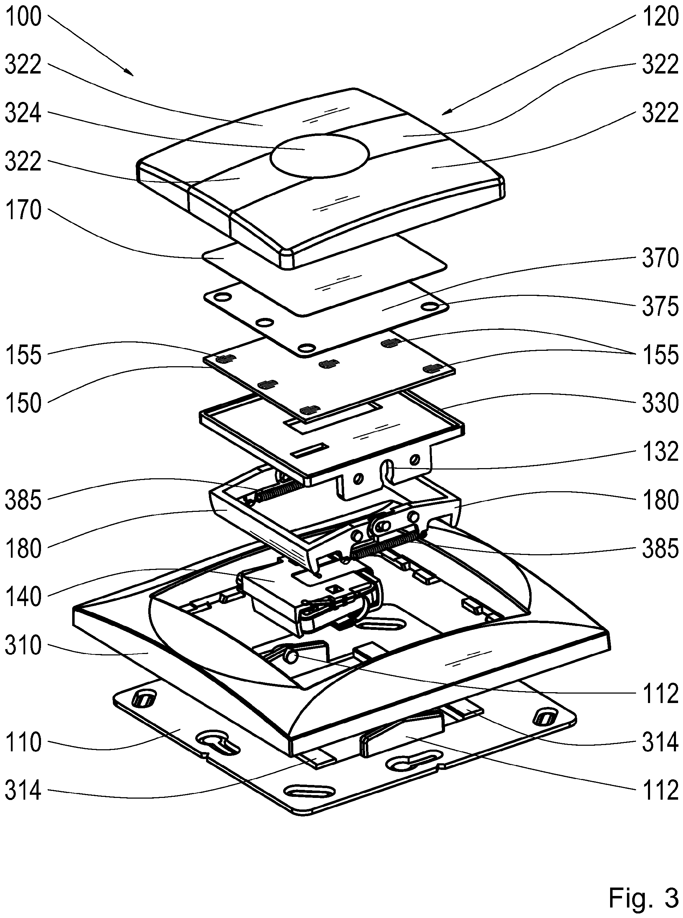

Fig. 3 zeigt eine perspektivische Explosionsdarstellung eines Funktasters 100 gemäß einem Ausführungsbeispiel der vorliegenden Erfindung. Bei dem Funktaster 100 handelt es sich beispielsweise um einen Funktaster wie den in Fig. 1 gezeigten und beschriebenen Funktaster. Der Funktaster 100 gemäß dem in Fig. 3 dargestellten Ausführungsbeispiel der vorliegenden Erfindung umfasst eine Bodenplatte 110, beispielhaft zwei Ankopplungselemente 112 beispielhaft in Gestalt von an Stegvorsprüngen angeordneten Zapfen, eine Taste 120, beispielhaft zwei Kopplungselemente 132 beispielhaft in Gestalt von Langlöchern, von denen darstellungsbedingt lediglich eines gezeigt ist, eine Energiewandlereinrichtung 140, einen Schaltungsträger 150, beispielhaft sieben Codierkontakte 155, von denen darstellungsbedingt lediglich fünf gezeigt sind, Betätigungsmittel zum Kontaktieren beispielhaft in Gestalt einer Schaltfolie 170, Betätigungsmittel zum Aktivieren beispielhaft in Gestalt von zwei Betätigungshebeln 180, einen Schalterrahmen 310, zwei Betätigungsbereiche bzw. Anschlagabschnitte 314 der Bodenplatte 110, beispielhaft vier erste Tastensegmente 322, beispielhaft ein zweites Tastensegment 324, ein Gehäuse 330, eine Abstandhalterfolie 370, beispielhaft sieben Durchgangsöffnungen 375, von denen darstellungsbedingt lediglich vier gezeigt sind, und beispielhaft zwei Rückstellfedern 385.

Der Funktaster 100 weist in der Explosionsdarstellung von Fig. 3 von der Bodenplatte 110 aus zu der Taste 120 hin betrachtet in dieser Reihenfolge die Bodenplatte 110 mit den Ankopplungselementen 112, den Schalterrahmen 310, die Energiewandlereinrichtung 140, die Betätigungshebel 180 mit den Rückstellfedern 385, das Gehäuse 330 mit den Kopplungselementen 132, den Schaltungsträger 150 mit den Codierkontakten 155, die Abstandhalterfolie 370 mit den Durchgangsöffnungen 375, die Schaltfolie 170 und die Taste 120 mit den ersten Tastensegmenten 322 und dem zweiten Tastensegment 324 auf. Dabei repräsentieren die Energiewandlereinrichtung 140, die Betätigungshebel 180 mit den Rückstellfedern 385, das Gehäuse 330 mit den Kopplungselementen 132, der Schaltungsträger 150 mit den Codierkontakten 155, die Abstandhalterfolie 370 mit den Durchgangsöffnungen 375 und die Schaltfolie 170 eine Schaltvorrichtung wie die Schaltvorrichtung aus Fig. 1.

Die Bodenplatte 110 mit beispielhaft quadratischem Grundriss weist Öffnungen zum Durchstecken von Befestigungsmitteln, wie beispielsweise Schrauben oder dergleichen auf. Die Bodenplatte 110 ist z. B. mittels Schraub- oder Klebeverfahren direkt auf Putz, Möbelteile, Fliesen, Glas, Türblätter oder dergleichen befestigbar. Zudem weist die Bodenplatte 110 in Gestalt der Ankopplungselemente 112 eine Schnittstelle zur Aufnahme der Schaltvorrichtung bzw. des autarken Schaltmoduls auf. Dabei sind die Ankopplungselemente 112 einstückig mit der Bodenplatte 110 ausgeformt. Ferner weist die Bodenplatte 110 die Anschlagabschnitte 314 auf, welche mit den Betätigungshebeln 180 der Schaltvorrichtung zusammenwirken. Dabei sind die Anschlagabschnitte 314 ausgebildet, um als Anschlagelemente für die Betätigungshebel 180 der Schaltvorrichtung zu wirken. Die Betätigungshebel 180 der Schaltvorrichtung sind gegen die Anschlagabschnitte 314 der Bodenplatte 110 in Anlage bringbar.

Der Schalterrahmen 310 ist an der Bodenplatte 110 befestigbar. Dabei ist der Schalter Rahmen 310 beispielsweise mit Hilfe eines Fixierringes oder mittels beliebigen Schnappverbindungen direkt auf die Bodenplatte 110 mittels einer Rastverbindung befestigbar. Hierbei weist der Funktaster 100 gemäß einem Ausführungsbeispiel einen optionalen Fixierring zur Fixierung des Schalterrahmens 310 auf.

Die Taste 120 ist gemäß dem in Fig. 3 dargestellten Ausführungsbeispiel der vorliegenden Erfindung als eine fünffach geteilte Taste zum Steuern von beispielsweise drei Lichtquellen, Jalousien, Rollos oder dergleichen mit einem runden, zentralen zweiten Tastensegment 324 z. B. für eine "Alles Aus"-Funktion ausgeführt. Gemäß einem anderen Ausführungsbeispiel ist die Taste 120 z. B. als eine Einzeltaste für eine einfache Schaltfunktion, als eine ungeteilte Taste für eine Doppelfunktion oder als eine zweifach bzw. mehrfach geteilte Taste für mehrere Funktionen ausgeführt.

Das Gehäuse 330 weist die Kopplungselemente 132 auf, die beispielhaft als zwei Langlöcher ausgeführt sind. Gemäß einem Ausführungsbeispiel weist das Gehäuse 330 einen Deckel zum Schutz von umschlossenen Einzelteilen auf. Dabei sind der Deckel und das Gehäuse 330 miteinander mittels einer Schnappverbindung verrastet. In dem Gehäuse 330 ist ein Funkmodul der Schaltvorrichtung, welches den Schaltungsträger 150, die Energiewandlereinrichtung 140, eine Einrichtung für Energiemanagement, einen Energiespeicher, eine Einrichtung zur Schaltcodierung, eine Funkelektronik und eine Signalausgabeeinrichtung aufweist, zumindest teilweise aufnehmbar. Das Funkmodul ist auf dem Schaltungsträger 150 realisiert. Bei dem Schaltungsträger 150 handelt es sich beispielsweise um eine Leiterplatte. Außerdem sind auch die Codierkontakte 155 bzw. Codierschalter in ein Layout des Schaltungsträgers 150 integriert. An dem Schaltungsträger 150 sind somit Schaltflächen bzw. Schaltstrukturen für die Codierkontakte 155, ein Energiemanagement, eine Funkelektronik und beispielsweise eine gedruckte Antenne als Signalausgabeeinrichtung angeordnet..

Die Energiewandlereinrichtung 140 weist einen geeigneten elektromagnetischen Energiewandler auf. Die Energiewandlereinrichtung 140 ist mittels der Betätigungshebel 180 aktivierbar. Bei den Betätigungshebeln 180 handelt es sich um einen gekoppelten Doppelhebelmechanismus mit beispielhaft zwei Rückstellfedern 385. Der Doppelhebelmechanismus umfasst die Betätigungshebel 180 als zwei symmetrisch ausgeformte und angeordnete Hebel, die miteinander mechanisch gekoppelt und mittels der Rückstellfedern 385 in eine Ruhestellung vorgespannt sind. Der Doppelhebelmechanismus bzw. die Betätigungshebel 180 sind ausgebildet, um eine Aktivierung der Energiewandlereinrichtung 140 bzw. des Generators durch Betätigen eines ersten, eines zweiten oder sogar beiden Betätigungshebeln 180 realisierbar ist. Die Rückstellfedern 385 weisen beispielsweise Zugfedern, Druckfedern, Drehfedern, Biegefedern oder dergleichen auf. Die Energiewandlereinrichtung 140 ist mittels Druckkontakten oder einer anderen Verbindungstechnologie durch Öffnungen im Gehäuse 330 an den Schaltungsträger 150 elektrisch kontaktierbar.

Ein Codiersystem bzw. Schaltsystem der Schaltvorrichtung ist insbesondere durch Positionieren der Codierkontakte 155 an einer der Schaltfolie 170 zugewandten Hauptoberfläche des Schaltungsträgers 150 realisiert. An der Schaltfolie 170 sind Schaltvorsprünge bzw. Schaltpillen ausrichtungsmäßig passend zu den Codierkontakten 155 auf dem Schaltungsträger 150 angeordnet. Zwischen dem Schaltungsträger 150 und der Schaltfolie 170 ist die Abstandhalterfolie 370 bzw. Abstandsfolie platziert. Im Bereich jedes Schaltvorsprungs bzw. jedes Codierkontakts 155 weist die Abstandhalterfolie 370 eine der Durchgangsöffnungen 375 auf. Bei einem Schaltvorgang wird zumindest einer der Schaltvorsprünge der Schaltfolie 170 durch zumindest eine Durchgangsöffnung 375 der Abstandhalterfolie 370 durchgedrückt und überbrückt die Schaltstruktur auf dem Schaltungsträger 150. Durch eine Dicke der Abstandhalterfolie 370 ist ein Betätigungsweg bei dem Betätigungsvorgang anpassbar. Die Codierkontakte 155 sind gemäß einem Ausführungsbeispiel mittels einer alternativen Schalttechnologie realisiert, wie z. B. mittels einer Gummimatte.

In einem mittleren Bereich der Bodenplatte 110 sind die Ankopplungselemente 112 in Gestalt von zwei Befestigungsstegen mit Zapfen angeordnet und repräsentieren eine Aufnahmemöglichkeit und Drehachse für die Schaltvorrichtung. Die Schaltvorrichtung ist mittels der Kopplungselemente 132 Gestalt der teils offenen Langlöcher in Seitenwänden des Gehäuses 330 auf die Ankopplungselemente 112, insbesondere die Zapfen, der Bodenplatte 110 einrastbar. Aufgrund der Lagerung der Zapfen innerhalb der Langlöcher kann die Schaltvorrichtung sowohl eine Drehbewegung als auch eine lineare Bewegung relativ zu der Bodenplatte 110 absolvieren. In Seitenabschnitten bzw. Seitenwänden der Schaltvorrichtung sind beispielhaft zwei Drahtfedern angeordnet, beispielsweise integriert, welche die Schaltvorrichtung von der Bodenplatte 110 weg vorspannen.

In die Tastensegmente 322, 324 geteilte Taste 120 ist an der Schaltvorrichtung eingerastet. Insbesondere ist die Taste 120 mit der Schaltvorrichtung derart verbunden, dass kleine Relativbewegungen einzelner Tastensegmente 322, 324 der Taste 120 relativ zu der Schaltvorrichtung, insbesondere auch lineare Bewegungen, möglich sind. Anders ausgedrückt ist die Taste 120 an der Schaltvorrichtung schwimmend gelagert. Auf einer Innenseite der Taste 120 sind Schaltnoppen bzw. Betätigungsnoppen angeordnet, die den Schaltvorsprüngen bzw. Schaltpillen der Schaltvorrichtung 170 und den Codierkontakten 155 des Schaltungsträgers 150 zugeordnet sind.

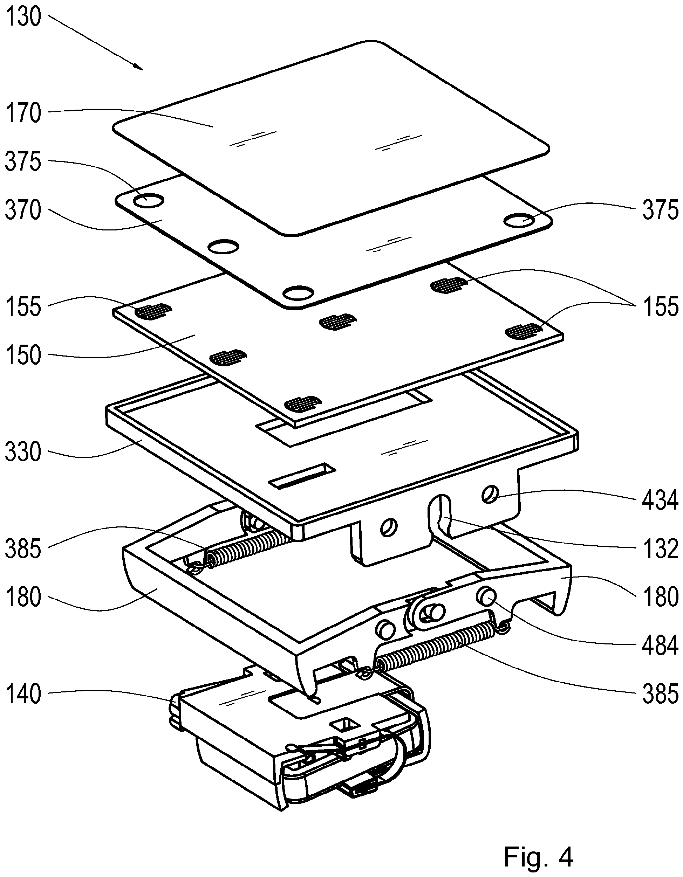

Fig. 4 zeigt eine perspektivische Explosionsdarstellung der Schaltvorrichtung 130 des Funktasters aus Fig. 3. Somit sind in Fig. 4 die Energiewandlereinrichtung 140, die Betätigungshebel 180 mit den Rückstellfedern 385, das Gehäuse 330 mit den Kopplungselementen 132, den Schaltungsträger 150 mit den Codierkontakten 155, die Abstandhalterfolie 370 mit den Durchgangsöffnungen 375 und die Schaltfolie 170 gezeigt. Ferner sind in Fig. 4 auch Rastöffnungen 434 des Gehäuses 330 dargestellt, in die Rastvorsprünge 484 der Betätigungshebel 180 einrastbar sind, um die Betätigungshebel 180 an dem Gehäuse 330 zu befestigen.

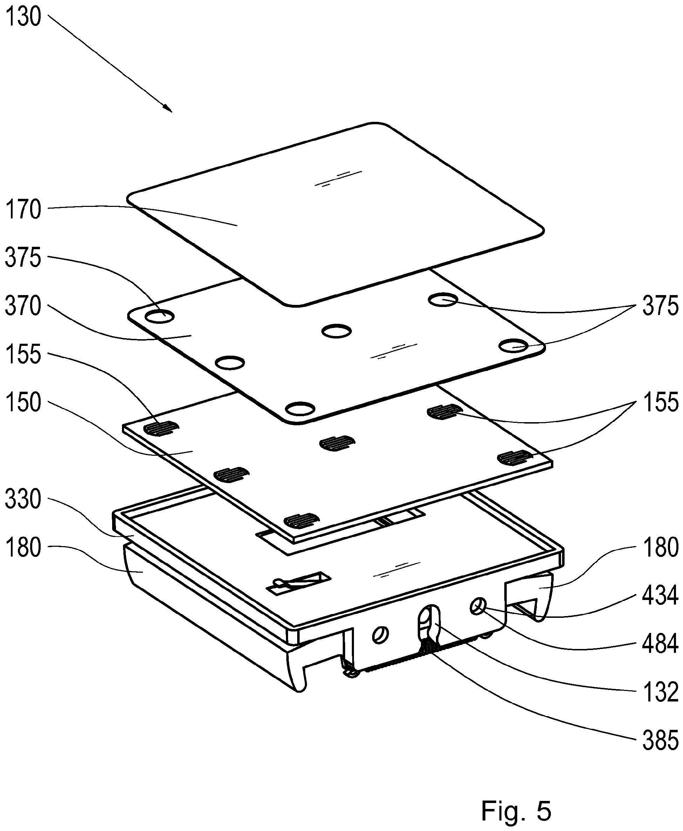

Fig. 5 zeigt eine perspektivische Teilexplosionsdarstellung der Schaltvorrichtung 130 des Funktasters aus Fig. 3. Die Darstellung in Fig. 5 entspricht hierbei der Darstellung aus Fig. 4 mit der Ausnahme, dass die Energiewandlereinrichtung darstellungsbedingt durch das Gehäuse 330 und die Betätigungshebel 180 verdeckt ist und die Betätigungshebel 180 an dem Gehäuse 330 befestigt dargestellt sind.

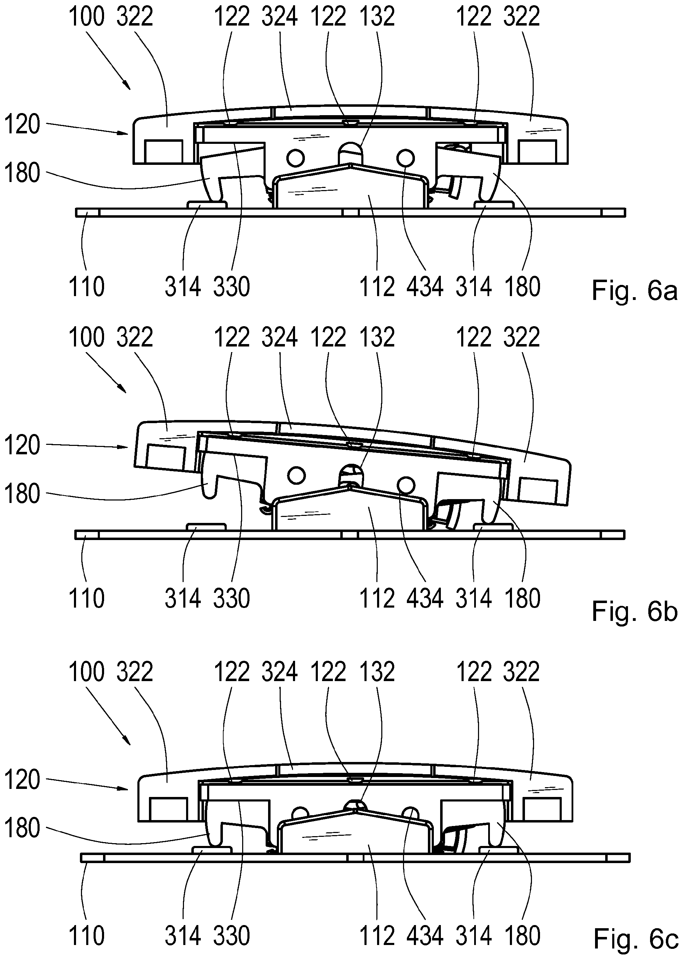

Figuren 6A bis 6C zeigen Schnittdarstellungen des Funktasters 100 aus Fig. 3 in einem zusammengefügten Zustand desselben in verschiedenen Stadien eines Betätigungsvorgangs. Gezeigt sind von dem Funktaster 100 hierbei darstellungsbedingt in den Figuren 6A bis 6C die Bodenplatte 110 mit den Ankopplungselementen 112 und den Anschlagabschnitten 314, die Betätigungshebel 180, das Gehäuse 330 mit den Kopplungselementen 132 und den Rastöffnungen 434, die Taste 120 mit den Schaltnoppen 122, den ersten Tastensegmenten 322 und dem zweiten Tastensegment 324. Somit sind die Energiewandlereinrichtung, der Schaltungsträger mit den Codierkontakten, die Abstandhalterfolie und die Schaltfolie darstellungsbedingt verdeckt und ist der Schalterrahmen in den Figuren 6A bis 6C weggelassen. Hierbei zeigt Fig. 6A dem Funktaster 100 in einer Ruhestellung ohne einwirkende Betätigungskraft, zeigt Fig. 6B den Funktaster 100 in einer Betätigungsstellung bei auf eines der ersten Tastensegmente 322 einwirkenden Betätigungskraft und zeigt Fig. 6C den Funktaster 100 in einer Betätigungsstellung bei auf das zweite Tastensegment 324 einwirkenden Betätigungskraft.

In Fig. 6A drücken bzw. ruhen beide Betätigungshebel 180 der Schaltvorrichtung im Wesentlichen gleichzeitig bzw. gleichmäßig auf den Anschlagabschnitten 314 der Bodenplatte 110 und stellen die Schaltvorrichtung in die Ruhestellung.

In Fig. 6B wird bei Betätigen der Taste 120 bzw. beispielhaft des ersten Tastensegments 322 auf der in den Figuren 6A bis 6C rechts dargestellten Seite bei einem ersten Betrag der Betätigungskraft das rechte erste Tastensegment 322 der Taste 120 abgesenkt und drückt mit seiner zugeordneten Schaltnoppe 122 die Schaltfolie der Schaltvorrichtung durch. Der zugeordnete Codierkontakt auf dem Schaltungsträger wird mittels der Schaltpille der Schalterfolie kurzgeschlossen und somit wird eine entsprechende Codierung der Elektronik vorbereitet.

Bei weiterer Betätigung bzw. bei einem zweiten Betrag der Betätigungskraft, der größer als der erste Betrag ist, wird der in den Figuren 6A bis 6C rechts dargestellte Betätigungshebel 180 in Bewegung gebracht und die Schaltvorrichtung sowie die Taste 120 kippen bzw. schwenken im Uhrzeigersinn, wie es in Fig. 6B gezeigt ist. Dabei drückt bzw. ruht der in den Figuren 6A bis 6C rechts dargestellte Betätigungshebel 180 auf dem in den Figuren 6A bis 6C rechts dargestellten Anschlagabschnitt 314 der Bodenplatte 110 und ist der in den Figuren 6A bis 6C links dargestellte Betätigungshebel 180 von dem in den Figuren 6A bis 6C links dargestellten Anschlagabschnitt 314 der Bodenplatte 110 beabstandet. Der entsprechende Codierkontakt bleibt während des Betätigungsvorgangs geschlossen. Bei einem definierbaren derart der Schwenkbewegung bzw. Kippbewegung wird die Energiewandlereinrichtung durch den rechten Betätigungshebel 180 aktiviert.

Die Funkelektronik, insbesondere die Signalausgabeeinrichtung bzw. Antenne wird mit Energie versorgt. Ein Logikbaustein der Schaltvorrichtung erzeugt einen der Codierung zugeordneten Befehl und eine Funkelektronik bewirkt ein Versenden des entsprechenden Schaltsignals per Funk an einen Empfänger. Beim Loslassen der Taste 120 stellt sich die Schaltvorrichtung in die Ruhestellung zurück. Während des Rückstellens wird ein weiteres Schaltsignal erzeugt.

Im Falle einer Betätigung des ersten Tastensegmentes 322 auf der in den Figuren 6A bis 6C linken Seite erfolgt eine Codierung unter Verwendung eines linken Codierkontaktes. Die Schaltvorrichtung kippt nach links und die Energiewandlereinrichtung wird durch linken Betätigungshebel 180 aktiviert.

In Fig. 6C erfolgt eine Schalterbetätigung des mittleren Segments der Taste 120, also des zweiten Tastensegments 324. Hierbei erfolgt eine lineare Bewegung der Schaltvorrichtung und der Taste 120 relativ zu der Bodenplatte 110. Dabei werden sowohl eine Langlochfeder bzw. elastische Mittel einer Langlochführung zur Vorspannung der Kopplungselemente 132 bezüglich der Ankopplungselemente 112 als auch die Rückstellfedern der Betätigungshebel 180 ausgelenkt. Dabei drücken bzw. ruhen beide Betätigungshebel 180 der Schaltvorrichtung im Wesentlichen gleichzeitig bzw. gleichmäßig auf den Anschlagabschnitten 314 der Bodenplatte 110. Hierbei wird mittels der Schaltvorrichtung ein Schaltsignal bzw. Funkbefehl versendet, um beispielsweise eine Funktion "Alles Aus" bei einem Empfänger zu bewirken. Dabei können z. B. Jalousien oder Leuchtmittel in einem Gebäude zentral angesteuert werden. Die Federkräfte der Codierkontakte, der Betätigungshebel 180 und der Langlochfedern können in geeigneter Weise anpassbar sein. Vorteilhaft hierbei ist es, eine zentrale Funktion "alles Aus" bzw. "alles An" zusätzlich zu anderen Schaltfunktionen innerhalb des Funktasters 100 bereitstellen zu können. Mit der in Fig. 6C dargestellten Schaltoption können z. B. bei Verlassen einer Wohnung alle Lichtquellen mit einem Tastendruck ausgeschaltet bzw. eingeschaltet werden.

Ein weiterer Vorteil ergibt sich durch eine Platzierung des Schaltungsträgers in dem Funktaster 100 benachbart zu der Taste 120. Da die Signalausgabeeinrichtung direkt auf einer der Taste 120 zugewandten Hauptoberfläche des Schaltungsträgers gedruckt werden kann, ist eine verlustarme Abstrahlung des Schaltsignals möglich.

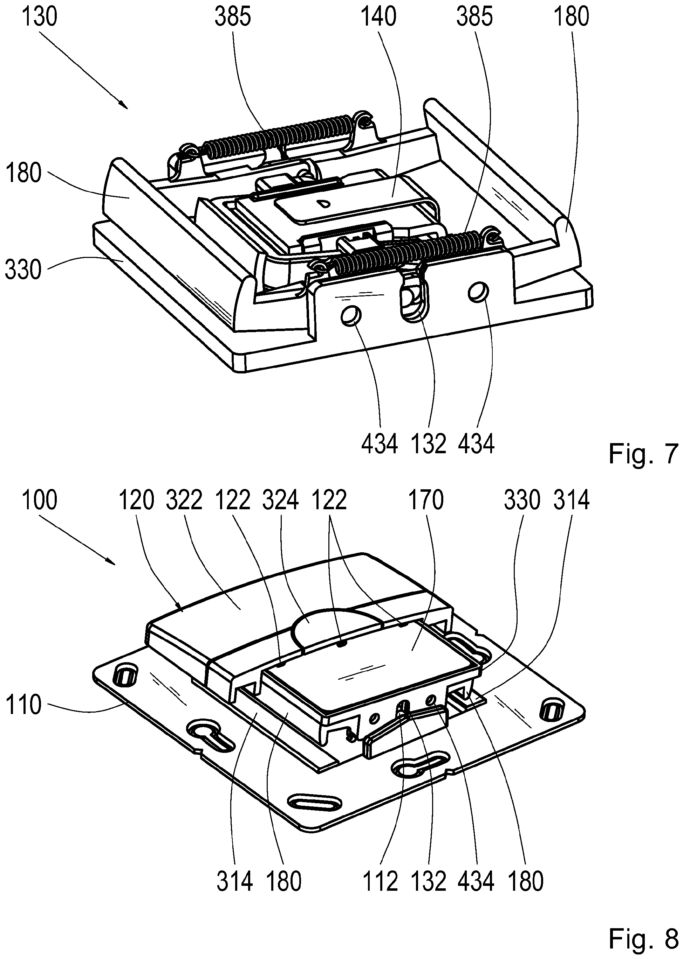

Fig. 7 zeigt eine perspektivische Darstellung der Schaltvorrichtung 130 des Funktasters aus Fig. 3 in einem zusammengefügten Zustand derselben in einer Unteransicht. Dabei sind in Fig. 7 die Energiewandlereinrichtung 140, die Betätigungshebel 180 mit den Rückstellfedern 385 sowie das Gehäuse 330 mit den Kopplungselementen 132 und den Rastöffnungen 434 gezeigt. Darstellungsbedingt verdeckt sind in Fig. 7 der Schaltungsträger mit den Codierkontakten, die Abstandhalterfolie mit den Durchgangsöffnungen und die Schaltfolie mit den Schaltvorsprüngen.

Fig. 8 zeigt eine perspektivische Teilschnittdarstellung des Funktasters 100 aus Fig. 3 in einem zusammengefügten Zustand desselben in einer Schrägaufsicht. Hierbei ist der Schalterrahmen in der Darstellung weggelassen und ist die Taste 120 geschnitten gezeigt. Somit sind in Fig. 8 von dem Funktaster 100 die Bodenplatte 110 mit den Ankopplungselementen 112 und den Anschlagabschnitten 314, die Betätigungshebel 180, das Gehäuse 330 mit den Kopplungselementen 132 und den Rastöffnungen 434, die Taste 120 mit den Schaltnoppen 122, einem ersten Tastensegment 322 und dem zweiten Tastensegment 324 dargestellt.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Funktaster
- 110: Bodenplatte
- 112: Ankopplungselement bzw. Befestigungssteg mit Zapfen
- 120: Taste
- 122: Schaltnoppe
- 130: Schaltvorrichtung bzw. Schaltmodul
- 132: Kopplungselement bzw. Langlochöffnung
- 134: elastische Mittel
- 140: Energiewandlereinrichtung
- 150: Schaltungsträger bzw. Leiterplatte
- 155: Codierkontakt
- 160: Signalausgabeeinrichtung mit Funkelektronik und Antenne
- 170: Betätigungsmittel zum Kontaktieren bzw. Schaltfolie
- 172: Schaltvorsprung bzw. Schaltpille
- 180: Betätigungsmittel zum Aktivieren bzw. Betätigungshebel
- F1: erste Betätigungskraft, dezentral auf die Schaltvorrichtung ausübbar
- F2: zweite Betätigungskraft, dezentral auf die Schaltvorrichtung ausübbar
- F3: dritte Betätigungskraft, zentral auf die Schaltvorrichtung ausübbar
- F4: Federkraft der elastischen Mittel
- 200: Verfahren zum Erzeugen
- 210: Schritt des Bereitstellens
- 220: Schritt des Generierens
- 230: Schritt des Ausgebens
- 310: Schalterrahmen
- 314: Anschlagabschnitt der Bodenplatte
- 322: erstes Tastensegment
- 324: zweites Tastensegment
- 330: Gehäuse
- 370: Abstandhalter bzw. Abstandhalterfolie
- 375: Durchgangsöffnung
- 385: Rückstellfeder
- 434: Rastöffnung
- 484: Rastvorsprung

## Patentansprüche

1. Schaltvorrichtung (130) für einen Funktaster (100), wobei die Schaltvorrichtung (130) eine Energiewandlereinrichtung (140), eine Signalausgabeeinrichtung (160), Betätigungsmittel (170, 172, 180) und eine Mehrzahl von Codierkontakten (155) aufweist, wobei die Betätigungsmittel (170, 172, 180) ausgebildet sind, um bei einem Betätigungsvorgang der Schaltvorrichtung (130) bei Anliegen eines ersten Betrags einer Betätigungskraft in einer Codierstellung mindestens einen der Mehrzahl von Codierkontakten (155) zu kontaktieren, um ein Codiersignal bereitzustellen, und bei Anliegen eines zweiten Betrags der Betätigungskraft, der größer als der erste Betrag ist, in einer Aktivierungsstellung die Energiewandlereinrichtung (140) zu aktivieren, um eine Energie zu generieren, wobei die Signalausgabeeinrichtung (160) ausgebildet ist, um unter Verwendung des Codiersignals und der Energie ein Schaltsignal per Funk auszugeben, **dadurch gekennzeichnet, dass** die Schaltvorrichtung (130) einen Schaltungsträger (150) aufweist, an dem die Signalausgabeeinrichtung (160) und die Codierkontakte (155) angeordnet sind, wobei der Schaltungsträger (150) in einem Betätigungsbereich der Schaltvorrichtung (130) angeordnet ist, in dem die Betätigungskraft auf die Schaltvorrichtung (130) übertragbar ist, wobei die Energiewandlereinrichtung (140) in einem Kopplungsbereich der Schaltvorrichtung (130) angeordnet ist, in dem die Schaltvorrichtung (130) mit dem Funktaster (100) koppelbar ist.

2. Schaltvorrichtung (130) gemäß Anspruch 1, **dadurch gekennzeichnet, dass** die Betätigungsmittel (170, 172) zum Kontaktieren des mindestens einen Codierkontakts (155) eine Schaltfolie (170) mit einer Mehrzahl von Schaltvorsprüngen (172) aufweisen, wobei die Betätigungsmittel (180) zum Aktivieren der Energiewandlereinrichtung (140) zumindest zwei Hebelelemente (180) aufweisen.

3. Schaltvorrichtung (130) gemäß einem der vorangegangenen Ansprüche, **gekennzeichnet durch** zumindest ein Kopplungselement (132) zum Koppeln mit einer Bodenplatte (110) des Funktasters (100), wobei das zumindest eine Kopplungselement (132) ausgebildet ist, um bei einem Betätigungsvorgang abhängig von einer Einleitungsposition der Betätigungskraft in die Schaltvorrichtung (130) eine Schwenkbewegung oder eine Linearbewegung der Betätigungsmittel (170, 172, 180) der Schaltvorrichtung (130) relativ zu der Bodenplatte (110) des Funktasters (100) zu ermöglichen.

4. Schaltvorrichtung (130) gemäß Anspruch 3, **dadurch gekennzeichnet, dass** die Betätigungsmittel (180) zum Aktivieren der Energiewandlereinrichtung (140) ausgebildet sind, um bei einem Betätigungsvorgang sowohl im Fall einer zentral in die Schaltvorrichtung (130) eingeleiteten Betätigungskraft (F3) als auch im Fall einer dezentral in die Schaltvorrichtung (130) eingeleiteten Betätigungskraft (F1, F2) die Energiewandlereinrichtung (140) auf gleiche Weise zu aktivieren.

5. Schaltvorrichtung (130) gemäß Anspruch 4, **dadurch gekennzeichnet, dass** die Schaltvorrichtung (130) von dem Kopplungsbereich aus zu dem Betätigungsbereich hin die Energiewandlereinrichtung (140), die Betätigungsmittel (180) zum Aktivieren der Energiewandlereinrichtung (140), ein Gehäuse (330), den Schaltungsträger (150), einen Abstandhalter (370) und die Betätigungsmittel (170, 172) zum Kontaktieren des mindestens einen Codierkontakts (155) aufweist.

6. Schaltvorrichtung (130) gemäß einem der vorangegangenen Ansprüche, **gekennzeichnet durch** Rückstellfedern (385) der Betätigungsmittel (180) zum Aktivieren der Energiewandlereinrichtung (140) und elastische Mittel (134), die ausgebildet sind, um die Betätigungsmittel (170, 172, 180) in eine Ruhestellung vorzuspannen, in der die Betätigungsmittel (170, 172, 180) von den Codierkontakten (155) beabstandet sind und die Energiewandlereinrichtung (140) deaktiviert ist.

7. Schaltvorrichtung (130) gemäß einem der vorangegangenen Ansprüche, **dadurch gekennzeichnet, dass** die Signalausgabeeinrichtung (160) ausgebildet ist, um bei einer Rückbewegung der Betätigungsmittel (170, 172, 180) von der Aktivierungsstellung in eine Ruhestellung ein weiteres Schaltsignal auszugeben.

8. Funktaster (100) mit folgenden Merkmalen:
einer Schaltvorrichtung (130) gemäß einem der vorangegangenen Ansprüche;
einer Bodenplatte (110) als eine Montagebasis zur Montage des Funktasters (100) an einem Träger, wobei die Bodenplatte (110) zumindest ein Ankopplungselement (112) zum Ankoppeln der Schaltvorrichtung (130) aufweist; und
einer Taste (120) zum Übertragen der Betätigungskraft auf die Schaltvorrichtung (130), wobei die Taste (120) an der Schaltvorrichtung (130) anbringbar ist.

9. Funktaster (100) gemäß Anspruch 8, **dadurch gekennzeichnet, dass** die Taste (120) in eine Mehrzahl von betätigbaren Tastensegmenten (322, 324) unterteilt ist, wobei der Funktaster (100) ausgebildet ist, um in Abhängigkeit von zumindest einem betätigten Tastensegment (322, 324) eines von einer Mehrzahl unterschiedlicher Schaltsignale bereitzustellen.

10. Verfahren (200) zum Erzeugen eines Schaltsignals einer Schaltvorrichtung (130) für einen Funktaster (100) bei einem Betätigungsvorgang der Schaltvorrichtung (130), wobei das Verfahren (200) in Verbindung mit einer Schaltvorrichtung (130) ausführbar ist, die eine Energiewandlereinrichtung (140), eine Signalausgabeeinrichtung (160), Betätigungsmittel (170, 172, 180), eine Mehrzahl von Codierkontakten (155) und einen Schaltungsträger (150) aufweist, an dem die Signalausgabeeinrichtung (160) und die Codierkontakte (155) angeordnet sind, wobei der Schaltungsträger (150) in einem Betätigungsbereich der Schaltvorrichtung (130) angeordnet ist, in dem die Betätigungskraft auf die Schaltvorrichtung (130) übertragbar ist, wobei die Energiewandlereinrichtung (140) in einem Kopplungsbereich der Schaltvorrichtung (130) angeordnet ist, in dem die Schaltvorrichtung (130) mit dem Funktaster (100) koppelbar ist, wobei das Verfahren (200) folgende Schritte aufweist:
Bereitstellen (210) eines Codiersignals, wenn bei Anliegen eines ersten Betrags einer Betätigungskraft die Betätigungsmittel (170, 172, 180) in einer Codierstellung mindestens einen der Mehrzahl von Codierkontakten (155) kontaktieren;
Generieren (220) von Energie, wenn bei Anliegen eines zweiten Betrags der Betätigungskraft, der größer als der erste Betrag ist, die Betätigungsmittel (170, 172, 180) in einer Aktivierungsstellung die Energiewandlereinrichtung (140) aktivieren; und
Ausgeben (220) des Schaltsignals per Funk mittels der Signalausgabeeinrichtung (160) unter Verwendung des Codiersignals und der Energie.

## Claims

1. Switching apparatus (130) for a radio pushbutton (100), wherein the switching apparatus (130) has an energy converter device (140), a signal output device (160), operating means (170, 172, 180) and a plurality of coding contacts (155), wherein the operating means (170, 172, 180) are designed, during an operating process of the switching apparatus (130), when a first value of an operating force is present, in order to make contact with at least one of the plurality of coding contacts (155) in a coding position in order to provide a coding signal, and, when a second value of the operating force is present, which second value is greater than the first value, in order to activate the energy converter device (140) in an activation position in order to generate energy, wherein the signal output device (160) is designed in order to output a switching signal by radio using the coding signal and the energy, **characterized in that** the switching apparatus (130) has a circuit carrier (150) on which the signal output device (160) and the coding contacts (155) are arranged, wherein the circuit carrier (150) is arranged in an operating region of the switching apparatus (130), in which operating region the operating force can be transmitted to the switching apparatus (130), wherein the energy converter device (140) is arranged in a coupling region of the switching apparatus (130), in which coupling region the switching apparatus (130) can be coupled to the radio pushbutton (100).

2. Switching apparatus (130) according to Claim 1, **characterized in that** the operating means (170, 172) have a switching film (170) with a plurality of switching projections (172) for the purpose of making contact with the at least one coding contact (155), wherein the operating means (180) have at least two lever elements (180) for the purpose of activating the energy converter device (140).

3. Switching apparatus (130) according to either of the preceding claims, **characterized by** at least one coupling element (132) for coupling to a base plate (110) of the radio pushbutton (100), wherein the at least one coupling element (132) is designed in order to allow a pivoting movement or a linear movement of the operating means (170, 172, 180) of the switching apparatus (130) relative to the base plate (110) of the radio pushbutton (100) during an operating process depending on an introduction position of the operating force into the switching apparatus (130).

4. Switching apparatus (130) according to Claim 3, **characterized in that** the operating means (180) are designed for activating the energy converter device (140) in order to activate the energy converter device (140) during an operating process in the same way both in the case of an operating force (F3) which is introduced centrally into the switching apparatus (130) and also in the case of an operating force (F1, F2) which is introduced decentrally into the switching apparatus (130).

5. Switching apparatus (130) according to Claim 4, **characterized in that** the switching apparatus (130) has, starting from the coupling region towards the operating region, the energy converter device (140), the operating means (180) for activating the energy converter device (140), a housing (330), the circuit carrier (150), a spacer (370) and the operating means (170, 172) for making contact with the at least one coding contact (155).

6. Switching apparatus (130) according to one of the preceding claims, **characterized by** return springs (385) of the operating means (180) for activating the energy converter device (140) and elastic means (134) which are designed in order to prestress the operating means (170, 172, 180) in an inoperative position in which the operating means (170, 172, 180) are at a distance from the coding contacts (155) and the energy converter device (140) is deactivated.

7. Switching apparatus (130) according to one of the preceding claims, **characterized in that** the signal output device (160) is designed in order to output a further switching signal in the case of a return movement of the operating means (170, 172, 180) from the activation position to an inoperative position.

8. Radio pushbutton (100) having the following features:
a switching apparatus (130) according to one of the preceding claims;
a base plate (110) as a mounting base for mounting the radio pushbutton (100) on a carrier, wherein the base plate (110) has at least one coupling element (112) for coupling the switching apparatus (130); and
a pushbutton (120) for transmitting the operating force to the switching apparatus (130), wherein the pushbutton (120) can be attached to the switching apparatus (130).

9. Radio pushbutton (100) according to Claim 8, **characterized in that** the pushbutton (120) is subdivided into a plurality of operable pushbutton segments (322, 324), wherein the radio pushbutton (100) is designed in order to provide one of a plurality of different switching signals depending on at least one operated pushbutton segment (322, 324).

10. Method (200) for generating a switching signal of a switching apparatus (130) for a radio pushbutton (100) during an operating process of the switching apparatus (130), wherein the method (200) can be executed in conjunction with a switching apparatus (130) which has an energy converter device (140), a signal output device (160), operating means (170, 172, 180), a plurality of coding contacts (155) and a circuit carrier (150) on which the signal output device (160) and the coding contacts (155) are arranged, wherein the circuit carrier (150) is arranged in an operating region of the switching apparatus (130), in which operating region the operating force can be transmitted to the switching apparatus (130), wherein the energy converter device (140) is arranged in a coupling region of the switching apparatus (130), in which coupling region the switching apparatus (130) can be coupled to the radio pushbutton (100), wherein the method (200) has the following steps:
providing (210) a coding signal if, when a first value of an operating force is present, the operating means (170, 172, 180) make contact with at least one of the plurality of coding contacts (155) in a coding position;
generating (220) energy if, when a second value of the operating force is present, which second value is greater than the first value, the operating means (170, 172, 180) activate the energy converter device (140) in an activation position; and
outputting (220) the switching signal by radio by means of the signal output device (160) using the coding signal and the energy.

## Revendications

1. Dispositif de commutation (130) destiné à un poussoir radio (100), le dispositif de commutation (130) comportant un système convertisseur de courant (140), un système émetteur de signaux (160), des moyens d'actionnement (170, 172, 180) et une pluralité de contacts de codage (155), lors d'un processus d'actionnement du dispositif de commutation (130), en présence d'un premier montant d'une force d'actionnement, dans une position de contact, les moyens d'actionnement (170, 172, 180) étant conçus, pour contacter au moins l'un parmi la pluralité de contacts de codage (155), pour mettre à disposition un signal de codage et en présence d'un deuxième montant de la force d'actionnement qui est supérieur au premier montant, dans une position d'activation, pour activer le système convertisseur de courant (140) pour générer une énergie, le système émetteur de signaux (160) étant conçu, en utilisant le signal de codage et l'énergie pour délivrer par radio un signal de commutation, **caractérisé en ce que** le dispositif de commutation (130) comporte un support de circuit (150) sur lequel sont placés le système émetteur de signaux (160) et les contacts de codage (155), le support de circuit (150) étant placé dans une zone d'actionnement du dispositif de commutation (130) dans laquelle la force d'actionnement est transmissible sur le dispositif de commutation (130), le système convertisseur de courant (140) étant placé dans une zone de couplage du dispositif de commutation (130) dans laquelle le dispositif de commutation (130) est susceptible d'être couplé avec le poussoir radio (100).

2. Dispositif de commutation (130) selon la revendication 1, **caractérisé en ce que** pour contacter l'au moins un contact de codage (155), les moyens d'actionnement (170, 172) comportent une pellicule de commutation (170) pourvue d'une pluralité de saillies de commutation (172), pour activer le système convertisseur de courant (140), les moyens d'actionnement (180) comportant au moins deux éléments à levier (180).

3. Dispositif de commutation (130) selon l'une quelconque des revendications précédentes, **caractérisé par** au moins un élément de couplage (132) destiné à être couplé sur une plaque d'embase (110) du poussoir radio (100), lors d'un processus d'actionnement, en fonction d'une position d'introduction de la force d'actionnement dans le dispositif de commutation (130), l'au moins un élément de couplage (132) étant conçu pour permettre un déplacement en pivotement ou un déplacement linéaire des moyens d'actionnement (170, 172, 180) du dispositif de commutation (130) par rapport à la plaque d'embase (110) du poussoir radio (100).

4. Dispositif de commutation (130) selon la revendication 3, **caractérisé en ce que** les moyens d'actionnement (180) sont conçus pour activer le système convertisseur de courant (140), pour activer le système convertisseur de courant (140) de la même façon lors d'un processus d'actionnement, aussi bien dans le cas d'une force d'actionnement (F3) introduite de manière centralisée dans le dispositif de commutation (130) qu'également dans le cas d'une force d'actionnement (F1, F2) introduite de manière décentralisée dans le dispositif de commutation (130) .

5. Dispositif de commutation (130) selon la revendication 4, **caractérisé en ce qu'**en partant de la zone de couplage en direction de la zone d'actionnement, le dispositif de commutation (130) comporte le système convertisseur de courant (140), les moyens d'actionnement (180) destinés à activer le système convertisseur de courant (140), un boîtier (330), le support de circuit (150), un espaceur (370) et les moyens d'actionnement (170, 172) destinés à contacter l'au moins un contact de codage (155).

6. Dispositif de commutation (130) selon l'une quelconque des revendications précédentes, **caractérisé par** des ressorts de rappel (385) des moyens d'actionnement (180) destinés à activer le système convertisseur de courant (140) et des moyens élastiques (134) qui sont conçus pour précontraindre les moyens d'actionnement (170, 172, 180) dans une position de repos, dans laquelle les moyens d'actionnement (170, 172, 180) sont écartés des contacts de codage (155) et le système convertisseur de courant (140) est désactivé.

7. Dispositif de commutation (130) selon l'une quelconque des revendications précédentes, **caractérisé en ce que** lors d'un déplacement en retour des moyens d'actionnement (170, 172, 180) de la position d'activation dans une position de repos, le système émetteur de signaux (160) est conçu pour délivrer un signal de commutation supplémentaire.

8. Poussoir radio (100) présentant les caractéristiques suivantes :
un dispositif de commutation (130) selon l'une quelconque des revendications précédentes ;
une plaque d'embase (110) faisant office de base de montage pour le montage du poussoir radio (100) sur un support, la plaque d'embase (110) comportant au moins un élément de couplage (112) pour le couplage du dispositif de commutation (130) ; et
une touche (120) destinée à transmettre la force d'actionnement sur le dispositif de commutation (130), la touche (120) étant susceptible d'être montée sur le dispositif de commutation (130).

9. Poussoir radio (100) selon la revendication 8, **caractérisé en ce que** la touche (120) est divisée en une pluralité de segments de touche (322, 324) actionnables, le poussoir radio (100) étant conçu pour mettre à disposition l'un parmi une pluralité de différents signaux de commutation en fonction d'au moins un segment de touche (322, 324) actionné.

10. Procédé (200), destiné à générer un signal de commutation d'un dispositif de commutation (130) pour un poussoir radio (100) lors d'un processus d'actionnement du dispositif de commutation (130), le procédé (200) étant réalisable en association avec un dispositif de commutation (130) qui comporte un système convertisseur de courant (140), un système émetteur de signaux (160), des moyens d'actionnement (170, 172, 180), une pluralité de contacts de codage (155) et un support de circuit (150) sur lequel sont placés le système émetteur de signaux (160) et les contacts de codage (155), le support de circuit (150) étant placé dans une zone d'actionnement du dispositif de commutation (130) dans laquelle la force d'actionnement est transmissible sur le dispositif de commutation (130), le système convertisseur de courant (140) étant placé dans une zone de couplage du dispositif de commutation (130) dans laquelle le dispositif de commutation (130) est susceptible d'être couplé avec le poussoir radio (100), le procédé (200) comportant les étapes suivantes consistant à :
mettre à disposition (210) un signal de codage, si en présence d'un premier montant d'une force d'actionnement, dans une position de codage, les moyens d'actionnement (170, 172, 180) contactent au moins l'un parmi la pluralité de contacts de codage (155) ;
générer (220) de l'énergie si ne présence d'un deuxième montant de la force d'actionnement qui est supérieur au premier montant, dans une position d'activation, les moyens d'actionnement (170, 172, 180) activent le système convertisseur de courant (140) ; et
délivrer (220) le signal de commutation par radio, à l'aide du système émetteur de signaux (160) en utilisant le signal de codage et l'énergie.
